# EUROPEAN PATENT APPLICATION

(11) **EP 4 756 205 A1**
(43) Date of publication of application: **10.06.2026**
(21) Application number: 24871659.9
(22) Date of filing: 27.08.2024
(51) Int. Cl.: F02D 11/02, E02F 9/26, F02D 11/04

(54) **WORK MACHINE**

(30) Priority: 27.09.2023 JP 2023166314
(71) Applicant: Hitachi Construction Machinery Co., Ltd., Tokyo 110-0015 (JP)
(72) Inventor: KUROKAMI, Kazushige, Tsuchiura-shi, Ibaraki 300-0013 (JP); SAKAMOTO, Hiroshi, Tsuchiura-shi, Ibaraki 300-0013 (JP); ISHII, Takaaki, Tsuchiura-shi, Ibaraki 300-0013 (JP); TOKITA, Shigeki, Tsuchiura-shi, Ibaraki 300-0013 (JP); FUJINAMI, Takumi, Tsuchiura-shi, Ibaraki 300-0013 (JP)
(74) Representative: Manitz Finsterwald Patent- und Rechtsanwaltspartnerschaft mbB
(86) International application number: PCT/JP2024/030442
(87) International publication number: WO 2025/069858

(57) **Abstract**

Provided is a work machine capable of achieving significant increases and decreases in engine rotational speed and easy fine adjustment thereof. The work machine includes: a power device that drives rotation; a work device that operates using the power device as a power source; and an instruction device that instructs an increase and a decrease in rotational speed of the power device. The instruction device includes a first instruction device and a second instruction device. A minimum change unit of the rotational speed of the power device that can be instructed by the first instruction device is different from a minimum change unit of the rotational speed of the power device that can be instructed by the second instruction device.

## Description

### Technical Field

The present invention relates to a work machine including an instruction device capable of instructing the rotational speed of a power device, such as an engine, which serves as a power source for operating a work device.

### Background Art

An engine and a hydraulic pump are mounted on a work machine such as a hydraulic excavator, and the work machine has a structure in which the rotation of the engine causes hydraulic fluid to be discharged from the hydraulic pump and drives the actuators of the work machine. The rotational speed of the engine can be set to an appropriate level by an operator in the operator's seat depending on the workload.

Generally, the engine rotational speed is set via a dial-type input device as described in Patent Literature 1. Dial-type input devices have a predetermined range within which the dial can be turned. For example, when the dial is turned to a limit position in the right rotation direction, the engine rotational speed becomes maximum, and conversely, when the dial is turned to a limit position in the left rotation direction, the engine rotational speed becomes minimum. Furthermore, when the dial is positioned between the limit positions, an arbitrary rotational speed between the maximum and minimum rotational speeds can be set according to the position. In such dial-type input devices, the minimum and maximum dial positions are used as references, and thus the operator can intuitively set the engine rotational speed.

### Citation List

### Patent Literature

Patent Literature 1: JP 2008-150965 A

### Summary of Invention

### Technical Problem

In the dial-type input devices, however, the minimum and maximum values of the engine rotational speed corresponding to the dial limit positions are generally set according to the specifications of the engine mounted on the work machine and the like. Therefore, if the allowable range of the dial turning (movable range) is set wide, the change in engine rotational speed relative to the operation amount of dial turning will be small, making it possible to finely adjust the engine rotational speed, but in work that often involves large increases and decreases in the engine rotational speed, the work efficiency may be reduced and inconvenience for the operator may be caused.

On the other hand, if the allowable range of the dial turning (movable range) is narrowed, the change in engine rotational speed relative to the operation amount of dial turning will be large, making it possible to quickly increase or decrease the engine rotational speed significantly, but fine adjustment of the engine rotational speed cannot be performed properly. In this case, it is difficult to set an appropriate engine rotational speed according to the work content, making it impossible to optimize the operating conditions of the work machine, and there is a concern that this could lead to a deterioration in fuel efficiency.

The present invention aims to provide a work machine capable of achieving significant increases and decreases in engine rotational speed and easy fine adjustment thereof.

### Solution to Problem

To solve the above problems, a work machine according to the present invention is a work machine including: a power device that drives rotation; a work device that operates using the power device as a power source; and an instruction device that instructs an increase and a decrease in rotational speed of the power device, in which the instruction device includes a first instruction device and a second instruction device, and a minimum change unit of the rotational speed of the power device that can be instructed by the first instruction device is different from a minimum change unit of the rotational speed of the power device that can be instructed by the second instruction device.

### Advantageous Effects of Invention

According to the present invention, it is possible to achieve significant increases and decreases in the rotational speed of a power device and easy fine adjustment thereof.

### Brief Description of Drawings

Fig. 1 is a diagram showing the appearance of a hydraulic excavator which is one example of a work machine.
Fig. 2 is a diagram showing a state inside an operator's cab.
Fig. 3 is a diagram showing the appearance of an engine control dial.
Fig. 4 is a diagram showing an example of a display screen of a touch monitor.
Fig. 5 is a diagram showing the positional relationship between the touch monitor and the engine control dial.
Fig. 6 is a diagram showing a system configuration according to the present embodiment.
Fig. 7 is a diagram showing the flow of a process in a change request value calculation section.
Fig. 8 is a diagram showing an example of a display screen of the touch monitor when the engine rotational speed is changed using the touch monitor.
Fig. 9 is a diagram showing an example of a display screen of the touch monitor when the engine rotational speed is changed using the engine control dial.
Fig. 10 is a diagram showing another example of a display screen of the touch monitor when the engine rotational speed is changed using the engine control dial.

### Description of Embodiments

With respect to an embodiment of the present invention, an example of a work machine using the present invention will be described with reference to the drawings.

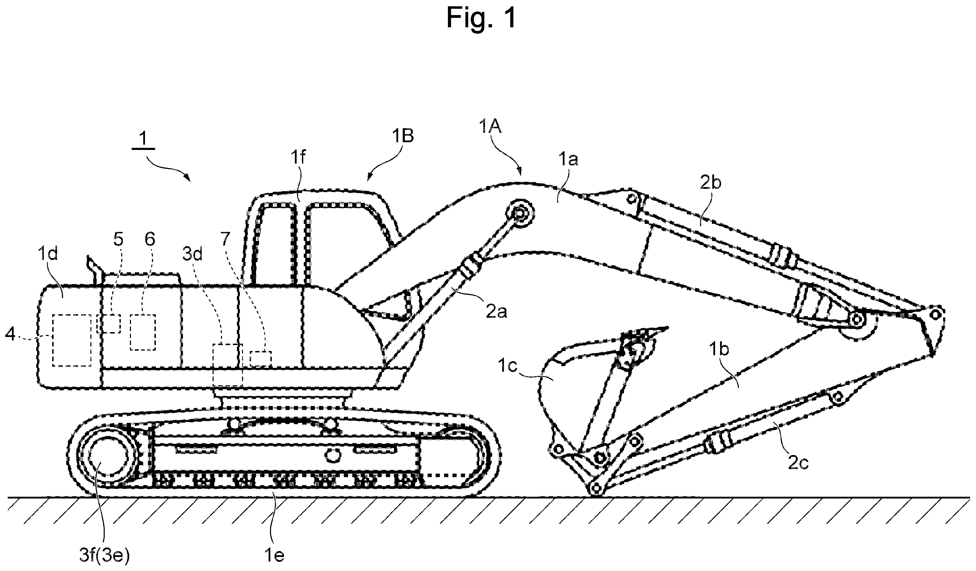

Fig. 1 shows an overview of a hydraulic excavator 1, which is an example of the work machine. The hydraulic excavator 1 is composed of an articulated front work implement 1A made up of a boom 1a, an arm 1b, and a bucket 1c, each rotating vertically, and a vehicle body 1B made up of an upper swing body 1d and a lower traveling body 1e. The upper swing body 1d is attached to the upper part of the lower traveling body 1e so as to be able to swing in the left and right directions. In addition, the upper swing body 1d is provided with an operator's cab 1f.

The base end of the boom 1a of the front work implement 1A is supported on the front part of the upper swing body 1d. The boom 1a, the arm 1b, the bucket 1c, the upper swing body 1d, and the lower traveling body 1e are driven by the actuators of a boom cylinder 2a, an arm cylinder 2b, a bucket cylinder 2c, a swing motor 3d, and left and right travel motors 3e, 3f, respectively.

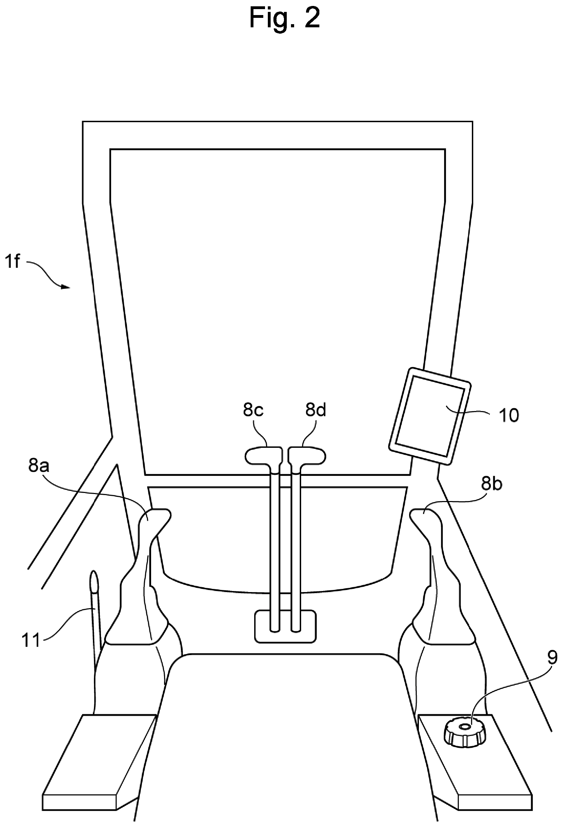

The upper swing body 1d includes an engine 4, a pump 5, an electronic control valve 6 and the like for operating the hydraulic excavator 1. The pump 5 is driven by the rotation of the engine 4 and discharges hydraulic fluid to each actuator. The electronic control valve 6 controls the operation of each actuator by changing the flow rate and flow direction of the hydraulic fluid in response to operation input from operation levers 8a, 8b, 8c, 8d (see Fig. 2) provided in the operator's cab 1f. The rotational speed of the engine 4 (hereinafter referred to as engine rotational speed) is controlled by a control device 7 so as to drive the engine 4 at a preset rotational speed ranging from a minimum rotational speed to a maximum rotational speed (hereinafter from 800 to 2000 rpm). The higher the engine rotational speed, the greater the flow rate of the hydraulic fluid discharged from the pump 5, allowing the front work implement 1A to operate at a higher speed and with a higher horsepower.

Fig. 2 is a diagram showing a state inside the operator's cab 1f. The electric-type operation levers 8a, 8b, 8c, 8d are disposed inside the operator's cab 1f. The operation levers 8a, 8b can be operated in four directions: front, back, left, and right, and correspond to the operation of the front work implement 1A and the upper swing body 1d (the boom cylinder 2a, the arm cylinder 2b, the bucket cylinder 2c, the swing motor 3d that operate them). In addition, the operation levers 8c, 8d can be operated in two directions: front and back, and correspond to the operation of the left and right travel motors 3e, 3f attached to the lower traveling body 1e.

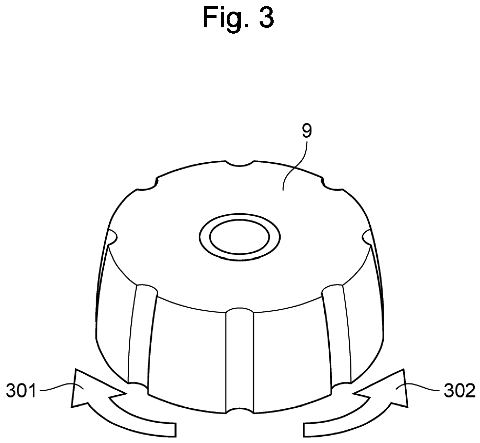

An engine control dial 9 is provided at the front right of the operator's cab 1f, and an arbitrary engine rotational speed can be set through a turning operation of the engine control dial 9. Fig. 3 is a diagram showing the appearance of the engine control dial 9. The engine control dial 9 is an endlessly rotatable rotary input device, and in the present embodiment, the engine control dial 9 has 24 operating steps per revolution. Right turn 301 of the engine control dial 9 increases the engine rotational speed according to the rotation amount (the number of steps) of the engine control dial 9, whereas left turn 302 of the engine control dial 9 decreases the engine rotational speed according to the rotation amount (the number of steps) of the engine control dial 9. That is, the engine control dial 9 is a dial-type instruction device capable of instructing an increase and a decrease in the engine rotational speed by the turning operation.

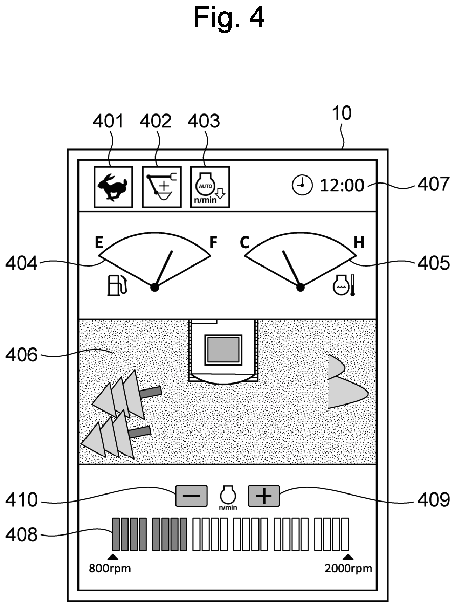

In addition, a touch monitor 10, which allows confirmation of the operating condition of the hydraulic excavator 1 and setting operations, is provided in the operator's cab 1f. Fig. 4 is a diagram showing an example of a display screen of the touch monitor 10. The display screen of the touch monitor 10 displays icons 401, 402, 403 indicating the setting status of the hydraulic excavator 1, instruments such as a fuel level gauge 404 and a water temperature gauge 405, a camera video 406 (acquired by a camera mounted on the vehicle body 1B or the like) to assist the operator's field of vision, a clock 407, and the like.

In addition, a meter 408 indicating the engine rotational speed is displayed at the lower part of the display screen of the touch monitor 10, and the engine rotational speed (800 to 2000 rpm) is displayed in 24 segments. Furthermore, touch buttons 409, 410 for increasing and decreasing the engine rotational speed are provided, and the engine rotational speed can be increased and decreased by tap operation on the respective touch buttons. That is, the touch buttons 409, 410 set or displayed on the touch monitor 10 are touch-type instruction devices capable of instructing an increase and a decrease in the engine rotational speed by a touch operation. Note that the meter 408 and the touch buttons 409, 410 may not be displayed all the time, but may be displayed only when the engine rotational speed has been changed or when the operator has performed a predetermined operation on the touch monitor 10.

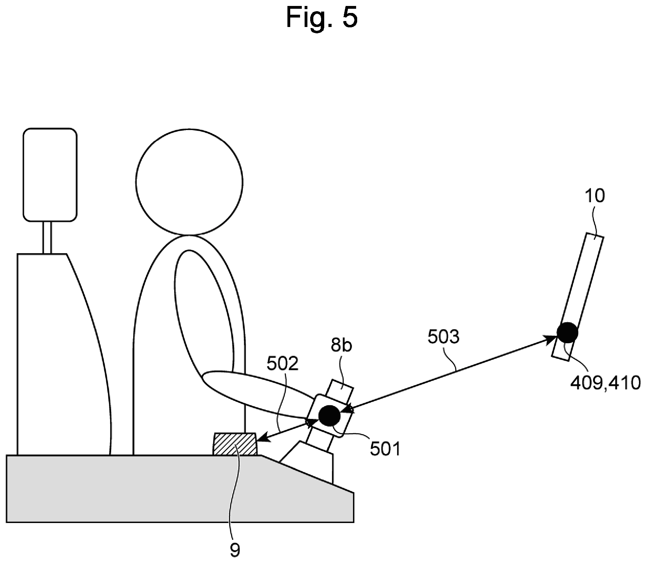

Fig. 5 is a side view showing the positional relationship between the devices. In the present embodiment, the engine control dial 9 is disposed on the rear side of the operation lever 8b, and the touch monitor 10 (i.e., the touch buttons 409, 410) is disposed on the front side of and above the operation lever 8b. That is, the operation lever 8b is disposed between the engine control dial 9 and the touch buttons 409, 410. The straight-line distance 502 between a grip portion 501 of the operation lever 8b and the engine control dial 9 is shorter than the straight-line distance 503 between the grip portion 501 of the operation lever 8b and the touch buttons 409, 410 (in other words, the engine control dial 9 is located closer to the operation lever 8b than the touch buttons 409, 410), so that when the operator is holding the operation lever 8b, the operator can operate the engine control dial 9 more easily than the touch buttons 409, 410. Note that, when there are multiple operation devices (operation levers) as in the present embodiment, it is desirable to dispose each device with reference to a representative operation device that is expected to be most frequently operated (held) during normal operation of the work machine and that is located in the direction of the hand used during the operation of the engine control dial 9 or the touch monitor 10.

In addition, as shown in Fig. 2, a shutoff lever 11 is provided at the front left of the operator's cab 1f, and the operator switches the shutoff lever 11 to either the locked position or the unlocked position depending on the state of the work. When the shutoff lever 11 is in the locked position, the electronic control valve 6 is controlled such that the actuators do not operate, regardless of the operation of each of the operation levers 8a, 8b, 8c, 8d.

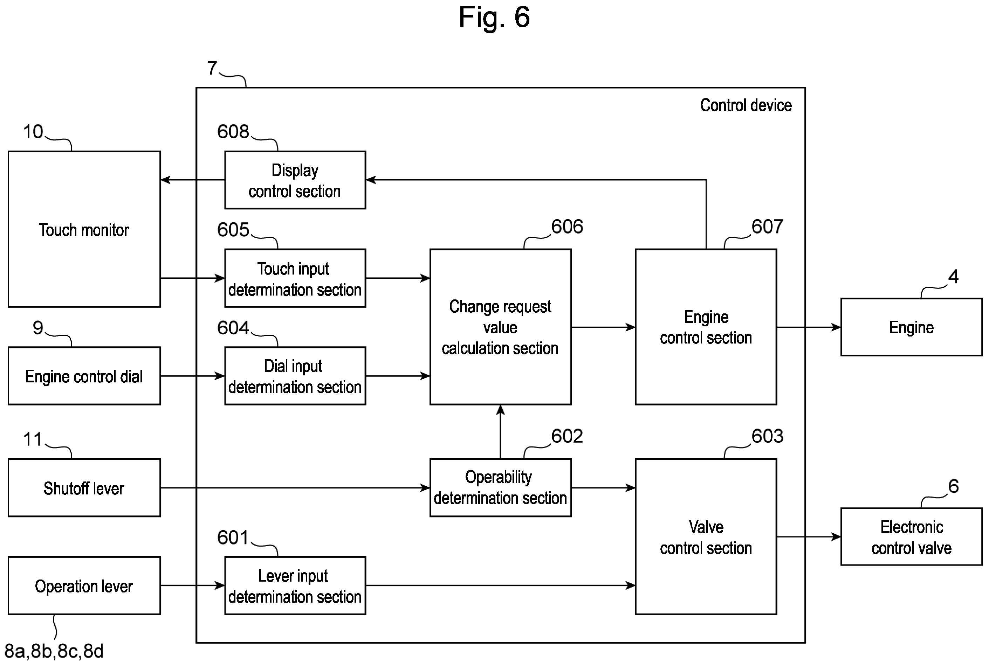

Fig. 6 is a diagram showing a system configuration according to the present embodiment. Each input/output device is connected to the control device 7, and the control device 7 performs various kinds of control, including information input and output between the device and the operator, and transmission of operation commands to the vehicle body. The control device 7 is configured to include the processes in a lever input determination section 601, an operability determination section 602, a valve control section 603, a dial input determination section 604, a touch input determination section 605, a change request value calculation section 606, an engine control section 607, and a display control section 608. The flow of the process in each processing section will be described below.

The lever input determination section 601 determines the operation amounts of the operation levers based on electrical signals output from the operation levers 8a, 8b, 8c, 8d, and outputs results to the valve control section 603. The operability determination section 602 detects the position (locked position or unlock position) of the shutoff lever 11, determines whether the vehicle body is operable or inoperable based on the state of the shutoff lever 11, and outputs a result to the valve control section 603 and the change request value calculation section 606. If the vehicle body is in an operable state, the valve control section 603 calculates and outputs a control command value to the electronic control valve 6 according to the operation amounts of the operation levers 8a, 8b, 8c, 8d.

The dial input determination section 604 detects the operation of the engine control dial 9 and outputs the operation information to the change request value calculation section 606. The operation information includes the rotation direction (right turn or left turn) of the engine control dial 9 and the number of steps turned.

The touch input determination section 605 determines whether or not tap operation has been performed on the touch buttons 409, 410, and outputs the number of times each button has been operated to the change request value calculation section 606. Note that if the touch buttons 409, 410 are pressed and held, the touch input determination section 605 may determine that one tap operation has been performed every predetermined time period and output a result.

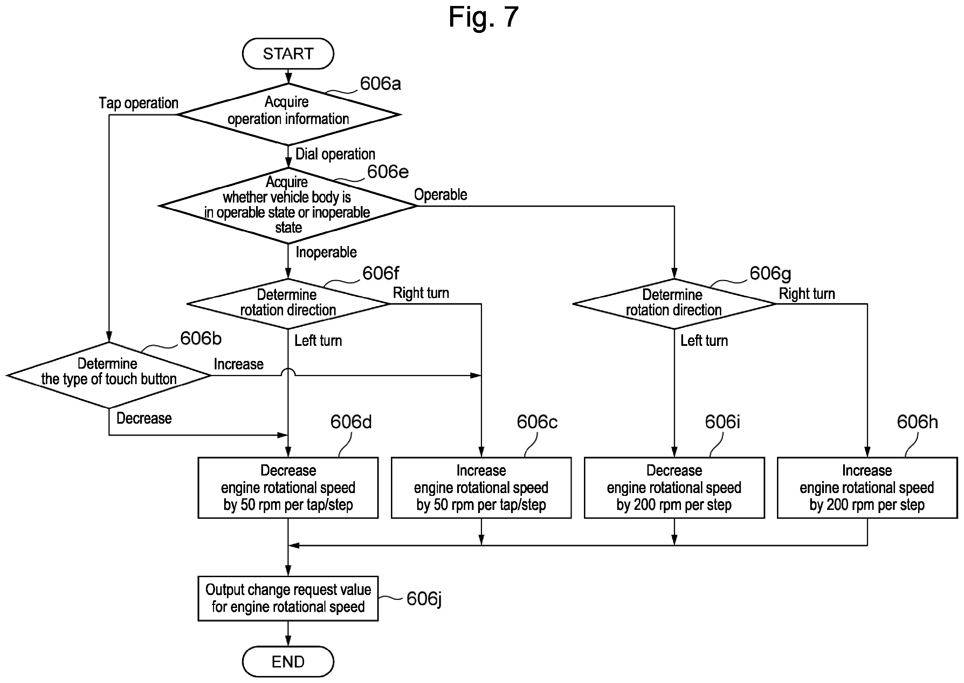

The change request value calculation section 606 calculates a change request value relative to the rotational speed of the engine 4 according to the operation content of the touch buttons 409, 410 and the engine control dial 9, and outputs a result to the engine control section 607. Fig. 7 is a diagram showing the flow of the process in the change request value calculation section 606.

First, in step 606a, operation information of the touch buttons 409, 410 and the engine control dial 9 is acquired. If it is determined that the type of operation information acquired is tap operation on the touch buttons 409, 410, the process proceeds to step 606b, where the type of touch button operated by the tap operation is determined.

In step 606b, if it is determined that the tapped touch button is the touch button 409 for increasing the engine rotational speed, the process proceeds to step 606c, where a change request value is calculated to increase the engine rotational speed by 50 rpm per tap. If the acquired operation information includes multiple times of tap operation, a value obtained by multiplying the minimum change request value (50 rpm) per tap by the number of times the operation has been performed is calculated, and the magnitude of the engine rotational speed to be increased is determined.

Meanwhile, in step 606b, if it is determined that the type of tapped touch button is the touch button 410 for decreasing the engine rotational speed, the process proceeds to step 606d, where a change request value is calculated to decrease the engine rotational speed by 50 rpm per tap.

In step 606a, if it is determined that the acquired operation information is dial operation performed on the engine control dial 9, the process proceeds to step 606e, where the operable state or the inoperable state of the vehicle body determined by the operability determination section 602 is acquired. If the vehicle body is in an inoperable state, the process proceeds to step 606f, where the rotation direction of the dial operation is determined. If the rotation direction of the dial operation is the right turn 301, the process proceeds to step 606c, where a change request value is calculated to increase the engine rotational speed by 50 rpm per step of the rotation amount. On the other hand, in step 606f, if the rotation direction of the dial operation is the left turn 302, the process proceeds to step 606d, where a change request value is calculated to decrease the engine rotational speed by 50 rpm per step of the rotation amount.

In step 606e, if the vehicle body is in an operable state, the process proceeds to step 606g, where the rotation direction of the dial operation is determined in the same manner as in step 606f. If the rotation direction of the dial operation is the right turn 301, the process proceeds to step 606h, where a change request value is calculated to increase the engine rotational speed by 200 rpm per step of the rotation amount.

At this time, the engine rotational speed may be divided into 200 rpm intervals (800/1000/1200/1400/1600/1800/2000), and if the current engine rotational speed does not match one of these intervals, a change request value may be calculated to increase the engine rotational speed from the current engine rotational speed to the closest interval in the direction of change for only, among the input dial operation, the turning operation that corresponds to the first one step.

In step 606g, if the rotation direction of the dial operation is the left turn 302, the process proceeds to step 606i, where the change request value is calculated to decrease the engine rotational speed by 200 rpm per step of the rotation amount, in contrast to step 606h.

The change request value for the engine rotational speed calculated in steps 606c, 606d, 606h, 606i is output to the engine control section 607 in step 606j, and the process in the change request value calculation section 606 ends.

The engine control section 607 determines the rotational speed of the engine 4 according to the change request value calculated by the change request value calculation section 606, and controls the engine 4 to satisfy the determined rotational speed. Note that the engine rotational speed is determined not only according to the change request value calculated by the change request value calculation section 606, but also comprehensively according to requests from various functions installed in the hydraulic excavator, such as an auto-idle function that automatically decreases the engine rotational speed to the minimum rotational speed if none of the operation levers has been operated for a certain period of time or longer, for example.

The display control section 608 acquires the current engine rotational speed from the engine control section 607, determines the number of segments of the meter 408 (Fig. 4) according to the engine rotational speed, and displays it on the touch monitor 10.

Hereinafter, an example of the behavior in the present embodiment will be described. First, an example of the case of changing the engine rotational speed using the touch monitor 10 will be described.

When the touch button 409 displayed on the touch monitor 10 for increasing the engine rotational speed is tapped three times, the change request value calculation section 606 performs the process in the order of steps 606a, 606b, 606c, and determines a change request value to increase the engine rotational speed by 150 rpm. Note that depending on the tap speed, the operating cycle of the control device, or the like, a change request value for an increase of 50 rpm may be output three times.

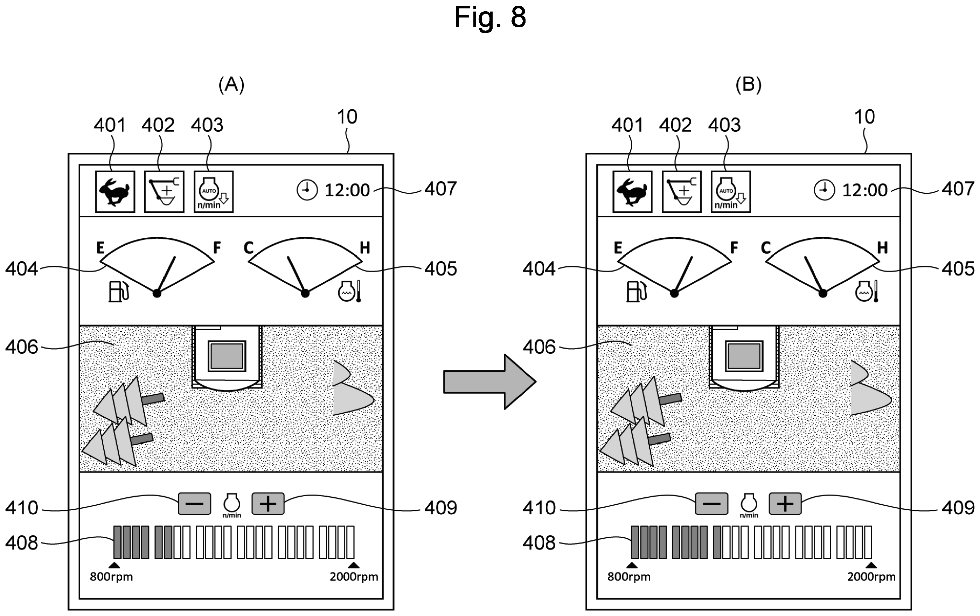

Fig. 8 is a diagram showing a change in the meter 408 when the engine control section 607 increases the engine rotational speed by 150 rpm according to the change request value. If the engine rotational speed before the change is 1100 rpm, the engine rotational speed increases to 1250 rpm after the change, and the increase in the engine rotational speed can be confirmed by the change in color of three segments (50 rpm/segment) to an active color as shown in (B) of Fig. 8 compared to (A).

When changing the engine rotational speed by the tap operation in this way, it is possible to change the engine rotational speed by a small increment (minimum change unit) of 50 rpm. This allows the operator to finely adjust the engine rotational speed according to the work content and to set the engine rotational speed suitable for the work, thereby enabling efficient work without consuming more fuel than necessary.

Note that the example using the tap operation is shown in the present embodiment, but the engine rotational speed may be set using a different type of touch operation, such as swipe operation using a slider bar. In addition, a change amount of the engine rotational speed by the tap operation is set to 50 rpm in the present embodiment, but any value may be set depending on the characteristics of the work machine or the like.

Next, an example of the case of changing the engine rotational speed using the engine control dial 9 will be described.

When the shutoff lever 11 is in an unlocked state and the hydraulic excavator 1 is in an operable state, the operation of the right turn 301 of the engine control dial 9 by three steps causes the change request value calculation section 606 to perform the process in the order of steps 606a, 606e, 606g, 606h, and determine a change request value to increase the engine rotational speed by 600 rpm.

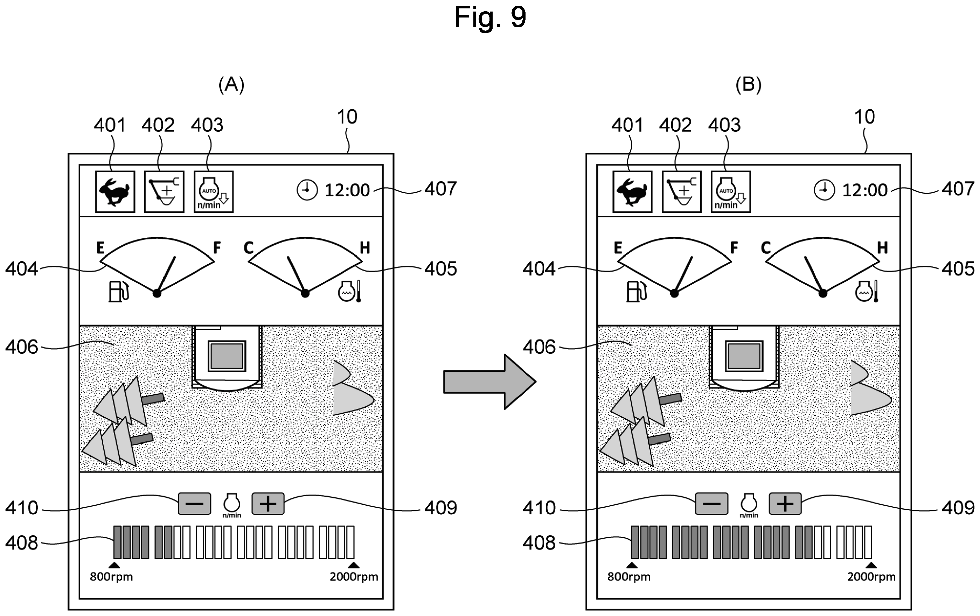

Fig. 9 is a diagram showing a change in the meter 408 when the engine control section 607 increases the engine rotational speed by 600 rpm according to the change request value. Like the example described previously, if the engine rotational speed before the change is 1100 rpm, the engine rotational speed increases to 1700 rpm after the change, and the color of 12 segments (50 rpm/segment) changes to an active color as shown in (B) of Fig. 9 compared to (A).

Note that the meter 408 may not only simultaneously reflect the change in the engine rotational speed as shown in (A) to (B) of Fig. 9, but may also sequentially reflect the change amount for each step of dial operation, clearly indicating the change amount of the engine rotational speed corresponding to the dial operation.

In addition, as in the above-described specifications, the engine rotational speed may be divided into 200 rpm intervals, and if the current engine rotational speed does not match one of these intervals, the engine rotational speed may be increased from the current engine rotational speed to the closest interval for, among the input dial operation, the turning operation that corresponds to the first one step.

At this time, assuming the operation of the right turn 301 of the engine control dial 9 by three steps, in step 606h, the change request value calculation section 606 acquires the current engine rotational speed and calculates a change request value. If the current engine rotational speed is 1100 rpm, the closest interval is 1200 rpm, so in the first step of the dial operation among the three steps, the change request value (an increase of 100 rpm) is determined to increase the engine rotational speed to 1200 rpm.

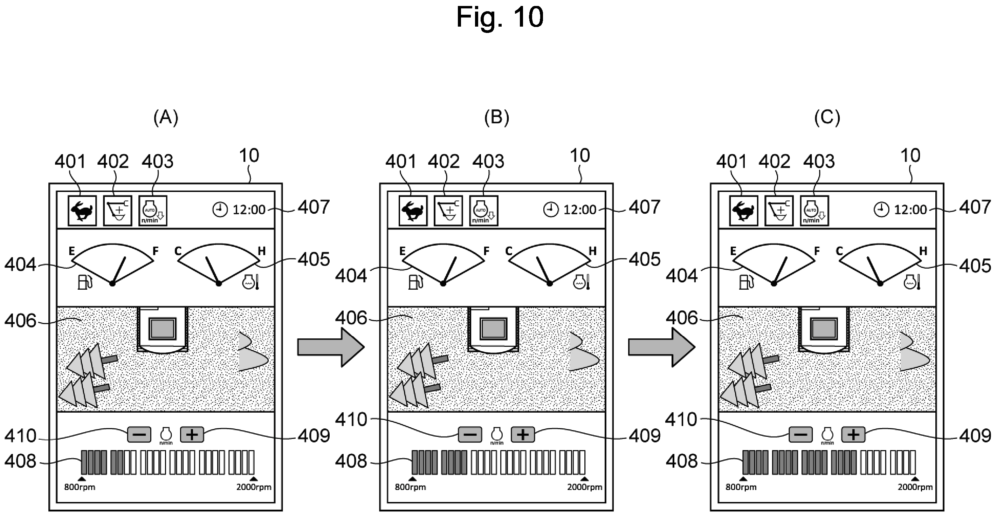

For the remaining two steps, the engine rotational speed is increased by 200 rpm per step according to the prescribed process, and thus the change request value is determined to increase the engine rotational speed by 400 rpm in total. Therefore, the change request value calculation section 606 outputs the change request value to increase the engine rotational speed by a total of 500 rpm. Fig. 10 shows a change in the meter 408 when these processes are performed. (B) of Fig. 10 shows the state where the engine rotational speed has been increased to 1200 rpm by the first step of the operation (change in color of two segments to an active color compared to (A)), and (C) of Fig. 10 shows the state where the engine rotational speed has been increased to 1600 rpm by the process of the remaining two steps (change in color of additional eight segments to an active color compared to (B)). Here, (B) of Fig. 10 is provided for the sake of explanation, but the transition from (A) to (C) of Fig. 10 may be made without passing through (B) of Fig. 10.

In this way, by changing the engine rotational speed according to the engine rotational speed intervals, it becomes easier for the operator to intuitively understand the current engine rotational speed.

Like the processes described above, when the hydraulic excavator 1 is in an operable state, even when increasing the rotational speed from the minimum rotational speed (800 rpm) to the maximum rotational speed (2000 rpm), a maximum of six steps of the turning operation of the engine control dial 9 is all that is required, so that the engine rotational speed can be changed quickly even when a significant increase or decrease in the engine rotational speed is required instantaneously during work.

In addition, if the shutoff lever 11 is in a locked state and the hydraulic excavator 1 is in an inoperable state, the change request value calculation section 606 determines to proceed from steps 606e to 606f.

Then, in step 606f, depending on the rotation direction of the dial operation, the process proceeds to step 606c or step 606d, where the change request value is determined. The change request value is changed by 50 rpm per step, in the same manner as the change in engine rotational speed by the tap operation. That is, in the present embodiment, when the hydraulic excavator 1 is in an inoperable state, the minimum change request value (initial change unit) for each step by the dial operation is made to match the minimum change request value (minimum change unit) (50 rpm) for each tap by the tap operation.

In situations where there is no need of a significant increase or decrease in the engine rotational speed instantaneously, such as when the work machine is in an inoperable state, the change amount (minimum change unit) of the engine rotational speed per step is set to be smaller than that when the work machine is in an operable state (in the present embodiment, is made to match the change amount (minimum change unit) of the engine rotational speed per tap), making it possible to finely adjust the engine rotational speed.

In the present embodiment, the engine control dial 9 is located closer to the operation lever 8b than the touch monitor 10, so when the work machine is in an inoperable state, the operator can finely adjust the engine rotational speed with the engine control dial 9 without having to reach for the touch monitor 10, thereby enabling more efficient work.

As described above, in the present embodiment, two engine rotational speed setting devices (instruction devices), namely, the engine control dial 9 and the touch monitor 10, are provided, each setting device (instruction device) being capable of setting an engine rotational speed with a different minimum change amount, and thus it is possible to achieve significant increases and decreases in the engine rotational speed and easy fine adjustment thereof, and improve work efficiency.

### [Summary]

As described above, the work machine (the hydraulic excavator 1) of the present embodiment is a work machine including a power device (the engine 4) that drives rotation, a work device (the front work implement 1A or the like) that operates using the power device as a power source, and an instruction device that instructs an increase and a decrease in rotational speed of the power device. The instruction device includes a first instruction device (the engine control dial 9) and a second instruction device (the touch buttons 409, 410 of the touch monitor 10). The minimum change unit (200 rpm) of the rotational speed of the power device that can be instructed by the first instruction device is different from the minimum change unit (50 rpm) of the rotational speed of the power device that can be instructed by the second instruction device.

In addition, the minimum change unit (200 rpm) of the rotational speed of the power device that can be instructed by the first instruction device is greater than the minimum change unit (50 rpm) of the rotational speed of the power device that can be instructed by the second instruction device, and the first instruction device (the engine control dial 9) is located closer to an operation device (the operation levers 8a, 8b, 8c, 8d) for operating the work device (the front work implement 1A or the like) than the second instruction device (the touch buttons 409, 410 of the touch monitor 10).

In addition, the first instruction device (the engine control dial 9) is a dial-type instruction device capable of instructing the rotational speed of the power device by a turning operation, and the second instruction device (the touch buttons 409, 410 of the touch monitor 10) is a touch-type instruction device capable of instructing the rotational speed of the power device by a touch operation.

In addition, when the work machine is in an inoperable state, the minimum change unit of the rotational speed of the power device that can be instructed by the first instruction device is made to match the minimum change unit of the rotational speed of the power device that can be instructed by the second instruction device.

In addition, the operation device is disposed between the first instruction device (the engine control dial 9) and the second instruction device (the touch buttons 409, 410 of the touch monitor 10).

In addition, the first instruction device (the engine control dial 9) is disposed on the rear side of the operation device, and the second instruction device (the touch buttons 409, 410 of the touch monitor 10) is disposed on the front side of the operation device.

By setting different minimum change amounts of rotational speed in each of the first instruction device and the second instruction device for instructing the rotational speed of the power device (the engine 4), the work machine (the hydraulic excavator 1) according to the present embodiment can operate a suitable instruction device for the case of significantly increasing and decreasing the rotational speed of the power device and for the case of finely adjusting the rotational speed of the power device, thereby enabling efficient setting of a target rotational speed.

In addition, by disposing the first instruction device, which has a larger minimum change amount, closer to the operation device than the second instruction device, it is possible quickly set the rotational speed of the power device even if a significant increase or decrease in the rotational speed of the power device is required instantaneously while operating the work machine.

In addition, by configuring the first instruction device and the second instruction device to be instruction devices having different input aspects, and further by configuring the first instruction device, which has a large minimum change amount, to be a dial-type instruction device capable of turning operation, it is possible to unhesitantly and quickly set the rotational speed of the power device, even if a significant increase or decrease in the rotational speed of the power device is required instantaneously.

In addition, by setting a small minimum change amount of rotational speed in the first instruction device when the work machine is in an inoperable state, during the non-working state with little likelihood of instantaneously increasing or decreasing the rotational speed of the power device, it is possible to change the rotational speed of the power device, including fine adjustment, using only the first instruction device, thereby enabling more efficient work.

As described above, according to the present embodiment, by achieving significant increases and decreases in the rotational speed of the power device and easy fine adjustment thereof, it is possible to easily set the rotational speed of the power device suitable for the work, and improve the work efficiency.

The above-described configurations of the control device 7, as well as the functions and execution processes of each configuration, may be realized in part or in whole by hardware (for example, by designing the logic that executes each function in an integrated circuit). The above-described configurations of the control device 7 may also be programs (software) that are read and executed by an arithmetic processing device (for example, a CPU) to realize the functions of the configurations of the control device. Information related to the programs may be stored, for example, in semiconductor memory (flash memory, SSD, etc.), magnetic storage devices (hard disk drives, etc.), and recording media (magnetic disks, optical disks, etc.).

In addition, in the above description of the embodiment, the control lines and information lines are those that are considered necessary for the description of the embodiment, but they do not necessarily show all the control lines and information lines related to the product. In reality, it can be considered that almost all components are interconnected.

### Reference Signs List

- 1: Hydraulic excavator (work machine)
- 1A: Front work implement
- 1B: Vehicle body
- 1a: Boom
- 1b: Arm
- 1c: Bucket
- 1d: Upper swing body
- 1e: Lower traveling body
- 1f: Operator's cab
- 4: Engine (power device)
- 5: Pump
- 6: Electronic control valve
- 7: Control device
- 8a, 8b, 8c, 8d: Operation lever (operation device)
- 9: Engine control dial (first instruction device)
- 10: Touch monitor
- 11: Shutoff lever
- 408: Meter
- 409, 410: Touch button (second instruction device)
- 601: Lever input determination section
- 602: Operability determination section
- 603: Valve control section
- 604: Dial input determination section
- 605: Touch input determination section
- 606: Change request value calculation section
- 607: Engine control section
- 608: Display control section

## Claims

1. A work machine comprising:
a power device that drives rotation;
a work device that operates using the power device as a power source; and
an instruction device that instructs an increase and a decrease in rotational speed of the power device,
wherein
the instruction device includes a first instruction device and a second instruction device, and
a minimum change unit of the rotational speed of the power device that can be instructed by the first instruction device is different from a minimum change unit of the rotational speed of the power device that can be instructed by the second instruction device.

2. The work machine according to claim 1, wherein
the minimum change unit of the rotational speed of the power device that can be instructed by the first instruction device is greater than the minimum change unit of the rotational speed of the power device that can be instructed by the second instruction device, and
the first instruction device is located closer to an operation device for operating the work device than the second instruction device.

3. The work machine according to claim 2, wherein
the first instruction device is a dial-type instruction device capable of instructing the rotational speed of the power device by a turning operation, and
the second instruction device is a touch-type instruction device capable of instructing the rotational speed of the power device by a touch operation.

4. The work machine according to claim 1, wherein when the work machine is in an inoperable state, the minimum change unit of the rotational speed of the power device that can be instructed by the first instruction device is made to match the minimum change unit of the rotational speed of the power device that can be instructed by the second instruction device.

5. The work machine according to claim 2, wherein the operation device is disposed between the first instruction device and the second instruction device.
